# EUROPEAN PATENT APPLICATION

(11) **EP 4 550 176 A1**
(43) Date of publication of application: **07.05.2025**
(21) Application number: 23207546.5
(22) Date of filing: 02.11.2023
(51) Int. Cl.: G06F 16/903, G06F 16/906, G06N 3/00

(54) **IMPROVED MULTI-OBJECTIVE GENETIC ALGORITHM BASED OPTIMIZATION**

(71) Applicant: Trendskout, 9000 Gent (BE)
(72) Inventor: Ovaere, Koen, 9000 Gent (BE); Muylle, Tom, 9000 Gent (BE)
(74) Representative: Patentales BV

(57) **Abstract**

The invention provides, amongst other aspects, a computer-implemented method of providing a result using a genetic algorithm, GA, comprising: obtaining an input dataset relating to technical measurements; generating and evaluating, using the GA, current candidate results based on the obtained input dataset; repeating the generating and evaluating a new set of candidates until at least one predetermined requirement is satisfied; and detecting the result from among the generated candidates results based on the satisfied at least one predetermined requirement, wherein the GA is a multi-objective GA, wherein each of the candidate results comprises a first dimension relating to data transformation, a second dimension relating to model selection, and a third dimension relating to hypertuning, wherein the generating and/or evaluating comprise selecting a subset dataset from the input dataset, the subset dataset being then used instead of the obtained input dataset.

## Description

### Field of the invention

The present invention relates to the technical domain of improved provision of a result using a multi-objective genetic algorithm.

### Background art

Genetic algorithms (GAs) have been widely applied to solve the problem of tuning hyper-parameters for a particular algorithm and the problem of feature selection due to their ability to discover good solutions for complex searching and optimization problems. They have the potential to generate both the optimal feature subset and hyper-parameters at the same time. The limitation of GAs is that they consider only a single objective to be either maximized or minimized. Studies addressing model selection often do not consider data transformation and/or assess optimization only on a single domain of their research and/or perform their optimization using only a single algorithm. It was found that one objective is not sufficient and there are multiple objectives that can be considered to build an effective model. These objectives are most often conflicting in nature.

Bouraoui, A., et al. A multi-objective genetic algorithm for simultaneous model and feature selection for support vector machines. Artif Intell Rev 50, 261-281 (2018). https://doi.orq/10.1007/s10462-017-9543-9 describes a multi-objective optimization problem, where the classification accuracy, the number of support vectors, the margin and the number of selected features define their objective functions. Bournaoui et al. concerns feature selection while performing their optimization only on a classification problem and only using a single algorithm, i.e., a support vector machine. Such approaches can only provide a limited number of possible combinations and are prone to local optima rendering the provided solutions not effective.

These challenges highlight the need for improved methods that can overcome these limitations.

The present invention aims at addressing issues, such as the issues mentioned above.

### Summary of the invention

According to a first aspect, the present invention provides a computer-implemented method of providing a result using a genetic algorithm, GA, said method comprising:
1.a. obtaining an input dataset relating to technical measurements;
1.b. generating, using the GA, an initial set of candidate results as a current set of candidate results based on the obtained input dataset;
1.c. evaluating, using the GA, the current set of candidate results;
1.d. generating, using the GA, a new set of candidate results as the current set of candidate results based on the obtained input dataset, wherein the new set of candidate results are elements of the candidate result space;
1.e. repeating steps 1.c-1.d until at least one predetermined requirement is satisfied; and
1.f. detecting the result from among the generated sets of candidates results based on the satisfied at least one predetermined requirement,

wherein the GA is a multi-objective GA,
wherein each of the candidate results comprises a first dimension, a second dimension and a third dimension, wherein the first dimension relates to data transformation, the second dimension relates to model selection, and the third dimension relates to hypertuning.

The method can generate and evaluate a number of candidate results larger than the number of possible combinations described in the prior art. Thus, the method ensures that a more effective result can be detected. Furthermore, the method involves using a multi-objective GA, where each of the candidate results comprises at least data transformation and model selection. At least these two dimensions increase the complexity of the optimization problem and provide a larger number of candidate results. The method takes more dimensions into account and can thus describe the candidate result space in more detail, which results in a greater chance of finding the real optimal candidate result in the candidate result space. Specifically, the granularity of the candidate result space (e.g., of the data transformation steps and the number of models) and/or the granularity of the output (e.g., the objective(s)) can be improved.

Most disclosures of the prior art require increased manual data processing and cleaning. The automated data transformation, which the GA of this method iterates over and/or changes, allows to reduce the manual processing of the data, thereby improving the organization of the data. Furthermore, the model selection of this method is not limited to a single algorithm (e.g. SVM), but is rather from a group of a plurality of regression models and classification models. Therefore, an advantage of this method is the automated detection of a result using the GA, while reducing the manual processing of the data. Thus, by using the multi-objective GA in combination with an increased population in the candidate result space, the method can increase the probability that global optima are achieved. All this, with minimal reliance on user input, particularly at least the input dataset.

In preferred embodiments, at least one of steps 1.b-1.d comprises selecting a subset dataset from the input dataset, the subset dataset being then used instead of the obtained input dataset. Advantageously, by selecting a subset dataset, the method reduces the size of the dataset, thereby improving the efficiency of detecting a result. Thus, the use of the multi-objective GA wherein the candidate results comprise the dimensions data transformation, model selection and hypertuning, in combination with the selection of a subset dataset provides a more efficient way of providing a global optimum.

According to a second aspect, the present invention provides a data processing device comprising means for carrying out the method according to the present invention.

According to a third aspect, the present invention provides a system according to claim 13. The system comprises a data processing device and at least one sensor module for performing technical measurements and transmitting the technical measurements to the data processing device.

According to a fourth aspect, the present invention provides a computer program comprising instructions which, when the program is executed by a computer, cause the computer to carry out the method according to the present invention.

According to a fifth aspect, the present invention provides a computer-readable medium comprising instructions which, when executed by a computer, cause the computer to carry out the method according to the present invention.

Preferred embodiments and their advantages are provided in the description and the dependent claims.

### Brief description Brief description of the drawings

The present invention will be discussed in more detail below, with reference to the attached drawings.
Fig. 1 and 2 show, respectively, examples of an input dataset and a subset dataset selected according to the present invention.
Fig. 3 and 4 show examples of a candidate result generated according to the present invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "candidate result" may refer to a candidate solution which refers to a potential result or solution to a given optimization problem.

In this document, the term "candidate result space" may refer to a candidate solution space, which refers to the entire range of potential results or solutions, and each point or combination within this space corresponds to a possible result or solution to the problem.

In this document, the term "objectives" relates to the individual optimization criteria that the GA aims to optimize. For example, the objective may be to maximize accuracy, minimize model size and minimize inference time.

In this document, the term "dimensions" relates to the decision variables or components that constitute a potential candidate result in the candidate result space.

In embodiments, the multi-objective GA is from the group of: Multi-objective Genetic Algorithm (MOGA), Niched Pareto Genetic Algorithm (NPGA), Weight-based Genetic Algorithm (WBGA), Random Weighted Genetic Algorithm (RWGA), Non-dominated Sorting Genetic Algorithm (NSGA), Strength Pareto Evolutionary Algorithm (SPEA), improved SPEA (SPEA2), Pareto-Archived Evolution Strategy (PAES), Pareto Envelope-based Selection Algorithm (PESA), Region-based Selection in Evolutionary Multi-objective Optimization (PESA-II), Fast Non-dominated Sorting Genetic Algorithm (NSGA-II), NSGA-III, Multi-objective Evolutionary Algorithm (MEA), Micro-GA, Rank-Density Based Genetic Algorithm (RDGA), and Dynamic Multi-objective Evolutionary Algorithm (DMOEA).

In preferred embodiments, the multi-objective GA is from the group where elitism is implemented, particularly from the group of: RWGA, PESA, PAES, NSGA-II, NSGA-III, SPEA, SOEA-2, RDGA, DMOEA.

In embodiments, the multi-objective GA comprises a first objective relating to one or more evaluation metrics. An advantage of the first objective is that the method provides automatic evaluation of the candidate results. Therefore, when generating candidate results where a different combination of data transformation, model selection and hypertuning is performed, the evaluation of the different combination can be automatically performed and the influence of the different combination on the result can be automatically detected. Another advantage is that the method provides effective evaluation of the candidate results. A different evaluation metric may be used to evaluate the same combination of data transformation, model selection and hypertuning. Thus, a more reliable evaluation metric may be used to more effectively detect an optimal result using the multi-objective GA.

In preferred embodiments, the first objective relates to a combination of the evaluation metrics. This allows parametrized evaluation of the candidate results to detect an optimal combination of evaluation metrics. This may be done by providing weights to each evaluation parameter of the evaluation metric. The weights may be determined by performing model agnostic meta learning (MAML) based on historical data. Thus, the purpose of a search space exploration can be tailored to the precise context of the analysis type.

In embodiments, the multi-objective GA comprises a second objective relating to at least one performance metric, preferably a combination of performance metrics. An advantage of including the performance metric allows to take into account which candidate results are most size efficient.

In embodiments, the multi-objective GA comprises a third objective relating to at least one computational metric, preferably a combination of computational metrics. An advantage of including a computational metric allows to take into account which candidate results are most time efficient. An advantage of including the computational metric allows to take into account which candidate results are most computationally efficient.

In embodiments, the multi-objective GA comprises any combination of the first objective, the second objective and the third objective, as described herein, the step of evaluating, using the GA, the current set of candidates (i.e., the initial set and/or the new set) is performed while generating said current set of candidates. For example, a combination of an evaluation metric and a plurality of computational metrics; a plurality of evaluation metrics and a computational metric; an evaluation metric and a plurality of performance metrics; a plurality of evaluation metrics, a performance metric and a computational metric, etc. A combination of any of the first, second and third objective allows to take into account which candidate results are most efficient and effective. Thus, run-time can be allocated in a smarter way, such as performing evaluations on multiple servers (e.g., cloud servers), thereby reducing hosting costs. By determining which jobs require more or less resources and/or time, via meta learning, a model can be determined which can make a cost/benefit assessment per job for allocating more run time.

In most preferred embodiments, the multi-objective GA may comprise or consist of the first, second, and third objectives. Thus, the method also takes multiple evaluation metrics (e.g., accuracy (F1, Kappa...), performance metrics (e.g., model size), computational metrics (inference speed) into account assuring that the best model is found for multiple facets/contexts and is not just optimized for one context (e.g., finding the most accurate model that's too big and that can't be used in an edge computing device with limited resources).

In embodiments, the combination of any of the first, second and third objective may be a linear combination, non-linear combination, a logarithmic combination, an exponential combination, a power combination, a quadratic combination, etc.

In embodiments, at least one of the steps of generating and evaluating the current set of candidate results comprises providing a feedback loop between/among any of the first, second, and third objectives. Thus, the method can more effectively provide automatic generation of a plurality of candidate results which have an improved balance between/among the any of the first, second, and third objectives.

in embodiments, at least one of steps 1.b ad 1.d of generating a respective set of candidate results comprises generating at least two, preferably all, candidate results in the respective set in parallel.

In embodiments, step 1.c of evaluating the current set of candidate results comprises evaluating at least two, preferably all, of the candidate results in the current set in parallel.

In embodiments, the technical measurements comprise data organized according to two or more attributes. The input dataset may be provided in the form of a table having columns representing the attributes and having rows representing the technical measurements. Thus, the step of selecting a subset dataset from the input dataset, wherein the subset dataset being then used instead of the obtained input dataset, may be performed by selecting at least one attribute from among the two or more attributes.

In embodiments, the step of obtaining an input dataset comprise selecting by the user a technical application which relates to the technical measurements.

In preferred embodiments, at least one of the steps of generating and evaluating the current set of candidate results is performed based on the selected technical application.

By obtaining the technical application from the user, the method can select a subset of data transformation techniques and/or models and/or hypertuning techniques and/or evaluation metrics and/or computational metrics. Therefore, the method ensures that suitable techniques and/or models and/or metrics are used in generating and evaluating sets of candidate results. Thus, the method can more effectively generating and evaluating the sets of candidate results.

In embodiments, the technical measurements comprise images (or image pixels) and image metadata or comprise sensor measurements and sensor metadata.

In preferred embodiments, the technical measurements consist of images or sensor measurements.

In embodiments, the technical application is selected from a group of: an image recognition application and/or an anomaly detection application. Examples of image recognition applications include: face mask detection, gender detection, make-up detection, facial features detection, mood detection, etc. Examples of anomaly detection applications include: fault detection in machinery, system health monitoring, event detection in sensor networks, detecting ecosystem disturbances, defect detection in images using machine vision, medical imaging diagnosis, etc.

In embodiments, a candidate result comprises a first dimension relating to the data transformation, a second dimension relating to the model selection, and a third dimension relating to the hypertuning.

In embodiments, the data transformation comprises any one or combination from the first group of: joining or merging of the data according to at least one of the attributes, changing a resolution of the images or the sensor measurements, and adapting color or contrast of the images. The group may further comprise: selecting a subset dataset from the input dataset (e.g., delete column(s)), add column(s) (e.g., by calculating the mean or max or min values of other columns), split column (e.g., date split into week number, day number, day of week, etc.), join/merge two data sources such as two tables (e.g., with fuzzy join), grouping/summation, change resolution, contrast/color adaptation, move/increase/decrease label (size), crop image, etc. In embodiments the first dimension is selected from said first group.

In embodiments, the model selection comprises any one or combination from the second group of: support vector machines (SVMs), auto encoder, DB-SCAN, naive bayes, transfer learning (several pre-trained models), convolutional neural networks (CNN), VGG's, decision trees, random forests, gradient boosting, logistic regression, k-nearest neighbors, etc. In embodiments, the second dimension is selected from said second group.

In embodiments, the hypertuning comprises any one or combination from the third group of: learning rate, number of Epochs, batch size, number of hidden layers and neurons, activation functions, dropout rate, weight initialization, regularization strength, optimizer, learning rate decay, early stopping, batch normalization, gradient clipping, learning rate schedule, loss function, etc. In embodiments the third dimension is selected from said third group, preferably based on the selected model.

In embodiments, the first objective relating to the evaluation metric comprises any one or combination from the fourth group of: F1-score, Area Under the ROC Curve (AUC-ROC), Cohen's Kappa, Accuracy, Mean Absolute Error (MAE), Mean Square Error (MSE), Root MSE (RMSE), etc. In embodiments, the first objective is selected from said fourth group.

In embodiments, the second objective relating to the performance metric comprises any one or combination from the fifth group of: model size, parameter count, model complexity, communication overhead, storage requirements, scalability, resource utilization, pruning ratio, data augmentation complexity, quantization, overhead rom framework or library, etc. In embodiments, the second objective is selected from said fifth group.

In embodiments, the third objective relating to the computational metric comprises any one or combination from the sixth group of: memory usage, training time, inference time, floating-point operations per second (FLOPS), latency, , accuracy vs. computational cost trade-offs, etc. In embodiments, the third objective is selected from said sixth group.

Thus, it is understood that the dimensions of the candidate results or candidate result space are each not limited by a single point, i.e., a single data transformation technique or a single model/algorithm or a single hypertuning technique. Furthermore, the output metrics, i.e., the evaluation, performance and computational metrics are not limited by a single point, i.e., a single evaluation metric or a single performance metric or a single computational metric.

In embodiments, the multi-objective GA comprises the second and third objectives, i.e., the performance and computations metrics. Thus, run-time can be allocated in a smarter way. By determining the energy consumption and/or the GPU/TPU utilization of each job, via meta learning, a model can be determined which can make a cost/benefit assessment per job for allocating more run time.

In embodiments, each candidate result is a vector comprising vector elements. The vector comprises at least a first vector element relating to the first dimension (i.e., relating to the data transformation), a second vector element relating to the second dimension (i.e., relating to the model selection), and a third vector element relating to the third dimension (i.e., relating to the hypertuning). For example, a vector having vector elements X, Y and Z, is defined as (X; Y; Z).

It will be understood that the components of a candidate result may relate to the respective vector elements.

As has been described above, at least one of the steps of generating and evaluating the current set of candidate results may be performed based on the selected technical application. For example, models may be selected based on the anomaly detection application from the group of: support vector machines (SVMs), auto encoder, DB-SCAN, Naive Bayes, etc. In another example, models may be selected based on the image recognition application from the group of: transfer learning (several pre-trained models), convolutional neural networks (CNN), VGG's, etc.

In embodiments, the step of generating a new set of candidate results comprises detecting first candidate results from the current set of candidate results, preferably wherein a first candidate result relates to first evaluation metric; detecting a second candidate result from the current set of candidate results, preferably wherein the second candidate result relates to a second evaluation metric; crossing over the first candidate result and the second candidate result with a third candidate result, preferably wherein the third candidate result relates to a new candidate result and/or a previously generated candidate result which was not detected in the step of detecting the result; and mutating the candidate result obtained from the step of performing cross-over.

In embodiments, the step of generating a new set of candidate results comprises determining at least one operator to be performed on the set of candidate results based on a modeling of the operator and by defining an implementation for each operator type. The at least one operator is selected from the group of: cross-over, mutation, cloning, and translocation. Some of these operators are not compatible with most representations of the candidate result space. Thus, by determining at least one operator relevant to the candidate result, the generating of the candidate result can be more effectively performed.

In embodiments, the at least one predetermined requirement includes any one or combination of: a maximum predetermined computing time, a maximum predetermined computing power, a maximum predetermined size of the candidate solution, a minimum evaluation metric, and minimum convergence in the evaluation metric.

In embodiments, the system comprises a data processing device; and at least one sensor module for performing technical measurements and transmitting the technical measurements to the data processing device, wherein the data processing device is configured to perform the steps of:
a. obtaining an input dataset relating to technical measurements;
b. generating, using a genetic algorithm, GA, an initial set of candidate results as a current set of candidate results based on the obtained input dataset;
c. evaluating, using the GA, the current set of candidate results;
d. generating, using the GA, a new set of candidate results as the current set of candidate results based on the obtained input dataset, wherein the new set of candidate results are elements of the candidate result space;
e. repeating steps c-d until at least one predetermined requirement is satisfied; and
f. detecting the result from among the generated sets of candidates results based on the satisfied at least one predetermined requirement,

wherein the GA is a multi-objective GA,
wherein each of the candidate results comprises a first dimension, a second dimension and a third dimension, wherein the first dimension relates to data transformation, the second dimension relates to model selection, and the third dimension relates to hypertuning,
wherein at least one of steps b-d comprises selecting a subset dataset from the input dataset, the subset dataset being then used instead of the obtained input dataset.

In embodiments, the data processing device comprises means for carrying out the method according to the present invention. The data processing device may comprise a central processing unit (CPU) configured to carry out the method according to the present invention by executing instructions; a memory module for storing program instructions and data; one or more input/output interfaces for communication with external devices (e.g., user device and/or sensor module); a display screen for rendering visual output to the user; and a storage medium for long-term data storage.

In embodiments, a non-transient computer readable medium containing a computer executable software which when executed on a computer system performs the method as defined herein before by the embodiments of the present disclosure. A non-transient computer readable medium may include an electrical connection having one or more wires, a portable computer diskette, a hard disk, a random access memory (RAM), a read-only memory (ROM), an erasable programmable read-only memory (EPROM or flash memory), a portable compact disc read-only memory (CD-ROM), an optical storage device, a magnetic storage device, or any suitable combination of the foregoing. In the context of this document, a non-transient computer readable medium may be any tangible medium that can contain, or store a program for use by or in connection with an instruction execution system, apparatus, device or module.

### Examples

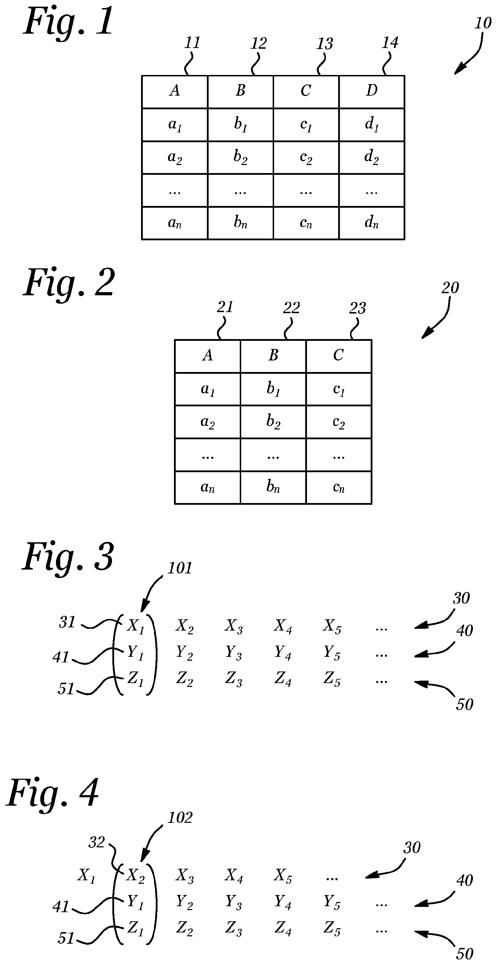

Example embodiments of the invention will be described with reference to Fig. 1-4, which are not intended to limit the scope of the invention in any way.

### Example 1: first example of a method of providing a result according to the invention

Reference is made to Fig. 1 and 2. Fig. 1 shows an obtained input dataset 10 relating to technical measurements. Fig. 2 shows a subset dataset 20 selected from the input dataset, wherein the subset dataset is then used in the method instead of the obtained input dataset.

The input dataset 10 shown in Fig. 1 relates to technical measurements which comprise data organized according to four attributes: a first attribute 11 called A, a second attribute 12 called B, a third attribute 13 called C and a fourth attribute 14 called D. The input dataset 10 may be seen as a table, wherein the columns represent the attributes and the rows represent the technical measurements.

As shown in Fig. 1, the first row comprises a value for each of the attributes, as follows: a value a₁ for attribute A, a value b₁ for attribute B, a value c₁ for attribute C, a value d₁ for attribute D. In this figure, the input dataset 10 has n rows (i.e., n technical measurements). Hence, the values of the attributes A-D for the remaining rows range from a₂, b₂, c₂, d₂ to aₙ, bₙ, cₙ, dₙ.

Considering an example of image recognition, where the technical measurements consist of images, the attributes may be selected from the group of: pixel value, image size, image resolution, color information, metadata, label or annotation, image format, camera/sensor data, etc. Here, the input dataset 10 is used to generate and evaluate a set of candidate results. An example of such candidate results can be understood from Example 2 below.

The subset dataset 20 in Fig. 2 is a subset dataset selected form the input dataset 10. The subset dataset 20 thus relates to the technical measurements which comprise data organized according to a number of attributes less than that of the input dataset 10. In this example, the subset dataset 20 is seen as a table having three columns representing the attributes A-C, i.e., the first attribute 21, the second attribute 22 and the third attribute 23, respectively.

In this example, the fourth attribute 14 has been omitted from being used for generating and/or analyzing a set of candidate results according to the present invention. An example of such candidate results can be understood from Example 2 below.

### Example 2: second example of a method of providing a result according to the invention

Reference is made to Fig. 3 and 4. Fig. 3 shows a first candidate result 101 generated according to the present invention. In this example, the multi-objective optimization problem is defined by four objectives: a first objective X, a second objective Y, a third objective Z and a fourth objective W.

The candidate results are vectors comprising vector elements. As shown in Fig. 1, the first candidate result 101 comprises four vector elements X₁, Y₁, Z₁, and W₁. Each of the vector elements is selected from a respective set of elements. The first vector element X₁ corresponds to the first element 31 selected from the first set of elements 30, the second vector element Y₁, corresponds to the first element 41 selected from the second set of elements 40, the third vector element Z₁ corresponds to the first element 51 selected from the third set of elements 50, and the fourth vector element W₁ corresponds to the first element 61 selected from the fourth set of elements 60.

The first candidate result 101 is thus evaluated according to the present invention.

Fig. 4 shows a second candidate result 102 generated according to the present invention. As shown in Fig. 4, the first vector element X₂ corresponds to the second element 32 selected from the first set of elements 30. The remaining vector elements Y₁, Z₁ and W₁ corresponds to the first elements 41, 51 and 61, respectively, as in the first candidate result 101.

The second candidate result 102 is thus evaluated according to the present invention.

In this example, the first objective X relates to data transformation, the second objective Y relates to model selection, the third objective Z relates to hypertuning, and the fourth objective W relates to a combination of evaluation metrics. A fifth objective may also be considered relating a computational metric. Alternatively, the fourth objective W may relate to a combination of at least one evaluation metric and at least one computational metric, such as a plurality of evaluation metrics and a plurality of computational metrics.

### Example 3: third example of a method of providing a result according to the invention

One example of a technical application is image recognition, where face masks are detected on a video stream of people entering a building where face masks are obligatory. The following steps are performed:
1. User provides image/video data.
2. The face masks are labeled on the video data, which is used to calculate precision and recall.
3. The multi-objective GA loads initial candidate solutions, for instance:
   3.1 (scale image x 0.5, upscale; VGG-16; Optimizer: Adam, Ir = 0.001),
   3.2 (crop image label boundaries x2 [*note: this is cropping the image to mainly contain the labeled part*]; RESNET-50; Optimizer= RMSprop, Ir = 0.002, dropout = true),
4. The multi-objective GA evaluates the current set of candidate solutions, by executing the steps described in the vector on the data. Each resulting model is then run on a evaluation set of the data, to check if the model detects the face masks. Additional measures include (but depend on user selected preferences and use case specific pre-loaded configurations regard) model size, training time, additional recall/precision metrics.
5. The multi-objective GA builds a new set of candidate solutions for instance:
   5.1 (crop image label boundaries x2; VGG-16; Optimizer: Adam, Ir = 0.002)
   5.2 cross-over 3.1 and 3.2: (crop image label boundaries x2; RESNET-50; Optimizer= Adam, Ir = 0.001, dropout = true)
   5.3 (no data transformation; RESNET-101; lr= 0,001, Optimizer = RMSprop)
6. Determine an evaluation score (F1 score) of the set of candidate solutions.
7. Repeat steps 4-6 until maximum training resources (for instance time) or minimal evaluation score obtained or convergence in evaluation score is obtained.

### Example 4: fourth example of a method of providing a result according to the invention

Another example of a technical application is anomaly detection where failures are detected in a CNC machine park with a plurality of machines. Each machine is fitted with a plurality of sensors, measuring various systems of which some of them did not contribute to the anomaly. The following steps are performed:
1. User provides anomaly detection data, (several data sources, hundreds of columns and millions of rows).
2. The anomalies are annotated as anomaly, to calculate recall and precision metrics.
3. The multi-objective GA loads initial candidate solutions for instance:
   (omit column i-j; DB-SCAN; epsilon = 0.9 ),
   (fuzzy join with datasource 2; auto encoder; activation function: ReLU),
4. The multi-objective GA evaluates the current set of candidate solutions, by executing the steps described in the vector on the data. Each resulting model is then run on an evaluation set of the data, to check if the unseen anomalies are detected. Additional measures include (but depend on user selected preferences) model size, training time, additional recall/precision metrics.
5. The multi-objective GA builds a new set of candidate solutions for instance
   5.1 (omit column i-j; auto encoder; activation function Rectified Linear Unit (ReLU))
   5.2 (omit column k-l; auto encoder; activation function Sigmoid)
   5.3 (fuzzy join with datasource 2; DB-SCAN; epsilon: 0.9)
6. Determine an evaluation score (F1 score) of the set of candidate solutions.
7. Repeat steps 4-6 until Maximum training resources (for instance time) or minimal evaluation score obtained or convergence in evaluation score is obtained.

An example of a detected vector (i.e., the result) is: (omit column k-l and perform some additional data transformation steps; auto encoder; activation function ReLU, loss function MSE). This candidate was only found after multiple iterations. The omitting part is key here, as this resulted in deleting data from the set, and as that resulted in better performance, it was maintained (by the elitist principle) in the candidate solution sets.

### (End of Example 4)

Although the present invention has been described above with reference to certain embodiments thereof, it will be evident that various modifications and changes may be made to these embodiments without departing from the broader scope of the present invention, as defined by the appended claims.

## Claims

1. A computer-implemented method of providing a result using a genetic algorithm, GA, said method comprising:
a. obtaining an input dataset relating to technical measurements;
b. generating, using the GA, an initial set of candidate results as a current set of candidate results based on the obtained input dataset;
c. evaluating, using the GA, the current set of candidate results;
d. generating, using the GA, a new set of candidate results as the current set of candidate results based on the obtained input dataset, wherein the new set of candidate results are elements of the candidate result space;
e. repeating steps 1.c-1.d until at least one predetermined requirement is satisfied; and
f. detecting the result from among the generated sets of candidates results based on the satisfied at least one predetermined requirement,
wherein the GA is a multi-objective GA,
wherein each of the candidate results comprises a first dimension, a second dimension and a third dimension, wherein the first dimension relates to data transformation, the second dimension relates to model selection, and the third dimension relates to hypertuning,
preferably wherein at least one of steps 1.b-1.d comprises selecting a subset dataset from the input dataset, the subset dataset being then used instead of the obtained input dataset.

2. The method according to claim 1, wherein the multi-objective GA comprises a first objective relating to a combination of evaluation metrics.

3. The method according to claim 1 or claim 2, wherein the multi-objective GA comprises a second objective relating to at least one performance metric.

4. The method according to any one of claims 1-3, wherein the multi-objective GA comprises a third objective relating to at least one computational metric.

5. The method according to any one of claims 1-4, wherein the technical measurements comprise data organized according to two or more attributes.

6. The method according to any one of claims 1-5, wherein step 1.a. comprises selecting by the user a technical application which relates to the technical measurements, preferably wherein at least one of steps 1.b-1.d is performed based on the selected technical application.

7. The method according to any one of claims 1-6, wherein the technical measurements consist of images or sensor measurements.

8. The method according to claim 6 or claim 7, wherein the technical application is selected from a group of: an image recognition application and/or an anomaly detection application.

9. The method according to any one of claims 5-8, wherein the data transformation comprises any one or combination of joining or merging of the data according to at least one of the attributes, changing a resolution of the images or the sensor measurements, and adapting color or contrast of the images.

10. The method according to any one of claims 1-9, wherein step 1.d comprises:
a. detecting first candidate results from the current set of candidate results, preferably wherein the first candidate results relate to an overall evaluation metric;
b. detecting second candidate results from the current set of candidate results, preferably wherein the second candidates relate to a sub measure;
c. crossing over the first candidate results and the second candidate results with third candidate results, preferably wherein the third candidate results relate to new candidate results and/or previously generated candidate results which were not detected in step 1.f; and
d. mutating the candidate results of step 10.c.

11. The method according to any one of claims 1-10, wherein the at least one predetermined requirement includes any one or combination of: a maximum predetermined computing time, a maximum predetermined computing power, a maximum predetermined size of the candidate solution, a minimum evaluation metric, and minimum convergence in the evaluation metric.

12. A data processing device comprising means for carrying out the method of any one of claims 1-11.

13. A system comprising:
a data processing device; and
at least one sensor module for performing technical measurements and transmitting the technical measurements to the data processing device;
wherein the data processing device is configured to perform the steps of:
a. obtaining an input dataset relating to technical measurements;
b. generating, using a genetic algorithm, GA, an initial set of candidate results as a current set of candidate results based on the obtained input dataset;
c. evaluating, using the GA, the current set of candidate results;
d. generating, using the GA, a new set of candidate results as the current set of candidate results based on the obtained input dataset, wherein the new set of candidate results are elements of the candidate result space;
e. repeating steps 13.c-13.d until at least one predetermined requirement is satisfied; and
f. detecting the result from among the generated sets of candidates results based on the satisfied at least one predetermined requirement,
wherein the GA is a multi-objective GA,
wherein each of the candidate results comprises a first dimension, a second dimension and a third dimension, wherein the first dimension relates to data transformation, the second dimension relates to model selection, and the third dimension relates to hypertuning,
preferably wherein at least one of steps 13.b-13.d comprises selecting a subset dataset from the input dataset, the subset dataset being then used instead of the obtained input dataset.

14. A computer program comprising instructions which, when the program is executed by a computer, cause the computer to carry out the method of any one of claims 1-11.

15. A computer-readable medium comprising instructions which, when executed by a computer, cause the computer to carry out the method of any one of claims 1-11.
